# NEUE EUROPÄISCHE PATENTSCHRIFT

(11) **EP 2 609 816 B2**
(45) Veröffentlichungstag und Bekanntmachung des Hinweises auf die Entscheidung über den Einspruch: **10.05.2023**
(45) Hinweis auf die Patenterteilung: 12.06.2019
(21) Anmeldenummer: 12008338.1
(22) Anmeldetag: 14.12.2012
(51) Int. Cl.: A23L 3/005, A23L 3/10

(54) **VERFAHREN ZUR STERILERHITZUNG VON LEBENSMITTELN**
Process for heat sterilizing a food product
PROCEDE DE STERILISATION D'UN produit ALIMENTAIRE

(30) Priorität: 16.12.2011 DE 102011121171
(43) Veröffentlichungstag der Anmeldung: 03.07.2013
(60) Teilanmeldung: 19175338.3
(73) Patentinhaber: HIPP & CO, 6072 Sachseln (CH)
(72) Erfinder: Tomusch, Frithjof, 4810 Gmunden (AT); Heil, Gerhard, 85276 Pfaffenhofen an der Ilm (DE)
(74) Vertreter: Schiweck Weinzierl Koch Patentanwälte Partnerschaft mbB

(56) Entgegenhaltungen:
- EP-A1- 0 624 519
- EP-A2- 0 132 666
- EP-A2- 2 495 175
- WO-A1-99/26844
- WO-A1-03/037109
- CA-C- 1 290 972
- DE-A1- 19 805 773
- DE-T2- 69 320 601
- GB-A- 741 678
- GB-A- 1 220 849
- US-A- 2 639 991
- US-A- 3 138 178
- US-A- 3 516 218
- US-A- 5 424 087

## Beschreibung

Die Erfindung betrifft ein Verfahren zur Sterilerhitzung von Lebensmitteln gemäß den Ansprüchen.

Bekannte UHT-Anlagen zur Sterilisierung von aseptisch zu verpackenden Lebensmitteln arbeiten kontinuierlich mit Wärmetauschern. Ein derartiges Verfahren ist aus der EP 0 624 519 A1 bekannt. Dies erschwert die Behandlung von Lebensmitteln insbesondere mit grobstückigen Anteilen, da durch die Sterilisierung die strukturelle Beschaffenheit der Lebensmittel verändert wird. Außerdem führt die massive Scherbelastung vor allem im Kühlprozess zu starken negativen Einflüssen auf die rheologischen Eigenschaften des Produkts.

Der Erfindung liegt die Aufgabe zu Grunde, ein Verfahren zur Sterilisierung von Lebensmitteln vorzustellen, bei dem die Lebensmittel nur wenig belastet werden.

Diese Aufgabe wird mit einem gattungsgemäßen Verfahren zur Sterilerhitzung von Lebensmitteln gemäß den Ansprüchen gelöst.

Gemäß der Erfindung wird das Lebensmittel auf 110 bis 130 °C erhitzt und auf 60 bis 80 °C abgekühlt.

Um eine erneute Kontaminierung des Lebensmittels zu vermeiden, wird es nach dem Abkühlen sofort abgefüllt. Die Abfülltemperatur liegt dann bei 60 bis 80°C.

Gemäß der Erfindung wird das Lebensmittel sofort nach dem Abfüllen auf ca. 30 °C abgekühlt.

Eine vorteilhafte Ausführungsvariante sieht vor, dass das Lebensmittel gemäß einem vorgegebenen F-Wert gesteuert erhitzt und abgekühlt wird.

Das Verfahren eignet sich insbesondere für Behälter mit einem Volumen von 20 bis 400 1.

Das Lebensmittel kann induktiv oder mit Hochfrequenz erhitzt werden. Die Abkühlung erfolgt vorzugsweise mittels Mantelkühlung und/oder mittels Vakuumkühlung. Hierbei können die Erhitzungs- und die Kühlverfahren auch kombiniert werden.

Nach dem Abfüllen wird das Lebensmittel vorzugsweise im Kühlbad abgekühlt. Dies erlaubt es, die abgefüllten Gebinde schnell auf eine Temperatur von etwa 30 °C zu bringen.

Bei der Angabe der Temperaturen insbesondere im Gebinde wird der Wert für die Mischtemperatur im Gebinde angegeben. Die Kerntemperatur liegt dann höher. Nach dem Abkühlen des befüllten Gebindes liegt die Kerntemperatur bei etwa 40 °C.

Vorzugsweise wird das Lebensmittel innerhalb einer Zeitspanne von weniger als einer Stunde erhitzt, abgekühlt, abgefüllt und auf ca. 30 °C abgekühlt.

In einem bevorzugten Ausführungsbeispiel wird ein Lebensmittel chargenweise direkt F-Wert gesteuert steril erhitzt und anschließend mit Vakuum- und Mantelkühlung gekühlt. Dabei wird das Produkt in einer kleinen Druckkochanlage mit 20 bis 400 1 Arbeitsvolumen vorgelegt. Anschließend wird das Produkt mit Dampf oder alternativen Erhitzungsverfahren wie induktiver Erhitzung oder Hochfrequenzerhitzung auf bis zu 130 °C erhitzt. Dieser Vorgang wird direkt über den zu erzielenden F-Wert gesteuert. Im Anschluss wird das Produkt im gleichen Behälter mittels Mantelkühlung oder Vakuumkühlung gegebenenfalls mit Aromarückgewinnung auf 60 bis 80 °C zurückgekühlt, um anschließend abgefüllt zu werden. Nach dem Abfüllen wird das Lebensmittel im Gebinde in einem Kühlbad auf etwa 30 °C abgekühlt und dann gelagert.

Alle beschriebenen Prozessschritte erfolgen unmittelbar aufeinander, so dass das gesamte Verfahren zur Behandlung des Lebensmittels insbesondere wegen der Erhitzung und Kühlung im gleichen Behälter weniger als eine Stunde benötigt. Ein beschleunigtes Verfahren ist sogar in 45 Minuten und bevorzugt sogar in 30 Minuten durchführbar.

Durch die Parallelschaltung mehrerer Koch- und Kühleinheiten kann eine beliebige Abfüllleistung sichergestellt werden.

## Patentansprüche

1. Verfahren zur Sterilerhitzung von Lebensmitteln, bei dem das Lebensmittel auf 110 bis 130°C erhitzt wird und auf 60 bis 80°C abgekühlt wird, ***dadurch gekennzeichnet, dass*** das Lebensmittel in einem Behälter erhitzt wird und im gleichen Behälter abgekühlt wird, indem es chargenweise in mehreren Behältern parallel sterilisiert und kontinuierlich abgefüllt wird, dass das Lebensmittel nach dem Abkühlen sofort abgefüllt wird und dass das Lebensmittel sofort nach dem Abfüllen auf ca. 30 °C abgekühlt wird.

2. Verfahren nach Anspruch 1, ***dadurch gekennzeichnet, dass*** das Lebensmittel gemäß einem vorgegebenen F-Wert gesteuert erhitzt und abgekühlt wird.

3. Verfahren nach einem der vorhergehenden Ansprüche, ***dadurch gekennzeichnet, dass*** der Behälter ein Volumen von 20 bis 400 1 aufweist.

4. Verfahren nach einem der vorhergehenden Ansprüche, ***dadurch gekennzeichnet, dass*** das Lebensmittel induktiv erhitzt wird.

5. Verfahren nach einem der vorhergehenden Ansprüche, ***dadurch gekennzeichnet, dass*** das Lebensmittel mit Hochfrequenz erhitzt wird.

6. Verfahren nach einem der vorhergehenden Ansprüche, ***dadurch gekennzeichnet, dass*** das Lebensmittel vor dem Abfüllen mittels Mantelkühlung abgekühlt wird.

7. Verfahren nach einem der vorhergehenden Ansprüche, ***dadurch gekennzeichnet, dass*** das Lebensmittel vor dem Abfüllen mittels Vakuumkühlung abgekühlt wird.

8. Verfahren nach einem der vorhergehenden Ansprüche, ***dadurch gekennzeichnet, dass*** das Lebensmittel nach dem Abfüllen im Kühlbad abgekühlt wird.

9. Verfahren nach einem der vorhergehenden Ansprüche, ***dadurch gekennzeichnet, dass*** das Lebensmittel innerhalb einer Zeitspanne von weniger als einer Stunde erhitzt, abgekühlt, abgefüllt und auf ca. 30 °C abgekühlt wird.

## Claims

1. A method of sterile heating of food, in which the food is heated to 110 to 130°C and cooled to 60 to 80°C, wherein the food is heated in a container and cooled in the same container by sterilizing it batchwise in several containers in parallel and bottling it continuously, wherein the food is bottled immediately after cooling, and wherein the food is cooled to approximately 30°C immediately after bottling.

2. Method of claim 1, wherein the food is heated and cooled in a controlled manner according to a predetermined F-value.

3. Method of any one of the preceding claims, wherein the container has a volume of 20 to 400 I.

4. Method of any one of the preceding claims, wherein the food is inductively heated.

5. Method of any one of the preceding claims, wherein the food is heated with high-frequency.

6. Method of any one of the preceding claims, wherein the food is cooled by use of jacket cooling prior to bottling.

7. Method of any one of the preceding claims, wherein the food is cooled by use of vacuum cooling prior to bottling.

8. Method of any one of the preceding claims, wherein the food is cooled in the cooling bath after bottling.

9. Method of any one of the preceding claims, wherein the food is heated, cooled, bottled and cooled to approx. 30°C within a period of less than one hour.

## Revendications

1. Procédé de chauffage stérile de produits alimentaires, dans lequel le produit alimentaire est chauffé à 110 à 130 °C et refroidi à 60 à 80 °C, **caractérisé en ce que** le produit alimentaire est chauffé dans un récipient et refroidi dans le même récipient par le fait qu'il est stérilisé par lots, parallèlement, dans plusieurs récipients et embouteillé en continu, **en ce que** le produit alimentaire est embouteillé immédiatement après le refroidissement et **en ce que** le produit alimentaire est refroidi à environ 30 °C immédiatement après l'embouteillage.

2. Procédé selon la revendication 1, **caractérisé en ce que** le produit alimentaire est chauffé et refroidi de manière contrôlée selon une valeur F prédéterminée.

3. Procédé selon l'une quelconque des revendications précédentes, **caractérisé en ce que** le récipient a un volume de 20 à 400 1.

4. Procédé selon l'une quelconque des revendications précédentes, **caractérisé en ce que** le produit alimentaire est chauffé par induction.

5. Procédé selon l'une des revendications précédentes, **caractérisé en ce que** le produit alimentaire est chauffé à haute fréquence.

6. Procédé selon l'une quelconque des revendications précédentes, **caractérisé en ce que** le produit alimentaire est refroidi au moyen d'un refroidissement par enveloppe avant l'embouteillage.

7. Procédé selon l'une quelconque des revendications précédentes, **caractérisé en ce que** le produit alimentaire est refroidi au moyen d'un refroidissement par vide avant l'embouteillage.

8. Procédé selon l'une quelconque des revendications précédentes, **caractérisé en ce que** le produit alimentaire est refroidi dans le bain de refroidissement après l'embouteillage.

9. Procédé selon l'une quelconque des revendications précédentes, **caractérisé en ce que** le produit alimentaire est chauffé, refroidi, embouteillé et refroidi à environ 30 °C dans un délai inférieur à une heure.
